# EUROPÄISCHE PATENTANMELDUNG

(11) **EP 1 779 992 A2**
(43) Veröffentlichungstag der Anmeldung: **02.05.2007**
(21) Anmeldenummer: 06121987.9
(22) Anmeldetag: 09.10.2006
(51) Int. Cl.: B29C 45/14

(54) **Spritzguss-Verbundteil**

(30) Priorität: 25.10.2005 DE 102005051369; 20.09.2006 DE 102006044276
(71) Anmelder: Albea Kunststofftechnik GmbH & Co. KG, 77956 Seelbach (DE)
(72) Erfinder: Frattini, David, 77565, Offenburg (DE)
(74) Vertreter: Bauer, Wulf

(57) **Zusammenfassung**

Die Erfindung bezieht sich auf ein Spritzguss-Verbundteil mit einem flachen Körper (23), der eine erste Oberfläche (19) und eine zweite Oberfläche (21) hat, mit einer Lage (24) eines Haftvermittlers, die auf die zweite Oberfläche (21) aufgebracht ist und mit einem auf diese Lage (24) aufgespritzten Körper (28) aus Fblyethylen oder einem anderen Polyolefin. Die Körner (26) aus Polyethylen oder einem anderen Polyolefin sind einerseits mit der Lage (24) des Haftvermittlers und andererseits mit dem Kunststoffkörper verbunden, indem sie beim Aufbringen der heißen Schmelze des aufgespritzten Körpers (28) in einer Spritzgussform (30) eine Verbindung mit dem Kunststoffkörper eingehen.

## Beschreibung

Die Erfindung bezieht sich auf ein Spritzguss-Verbundteil nach dem Oberbegriff des Patentanspruchs 1 , auf einen Haftvermittler und auf ein Verfahren zur Herstellung eines Spritzguss-Verbundteils mit folgenden Verfahrensschritten:
- Bereitstellen eines flachen Körpers, der eine erste und eine zweite Oberfläche hat,
- Aufbringen einer Lage eines Haftvermittlers auf die zweite Oberfläche des flachen Körpers,
- Einbringen des so erhaltenen Zwischenprodukts in eine Spritzgussform, und
- Erstellen eines aufgespritzten Kunststoffkörpers durch Aufspritzen einer heißen Schmelze aus Polyethylen oder einem anderen Polyolefin auf die Lage.

Das Verfahren wird als Hinter-Spritz-Technik (HST) bezeichnet. Das Zwischenprodukt wird als "in mold surfacing film" bezeichnet. Bei der Hinter-Spritz-Technik werden flache Körper, also flächige Folien, Stoffe oder andere Materialien, in das Spritzgusswerkzeug eingelegt und von der Schmelze einseitig beschichtet.

Aus EP 097 8374 A2 ist ein Spritzguss-Verbundteil der eingangs genannten Art und ein Verfahren zu seiner Herstellung sowie ein Haftvermittler bekannt. In diesem Dokument wird ein Zwischenprodukt beschrieben, das als dekorativer Film bezeichnet wird. Es besteht aus einem flachen Körper und einer Lage an Haftvermittler. Dieses Zwischenprodukt ist dafür bestimmt, in eine Spritzgussform eingelegt zu werden und mit einem Kunststoffkörper hinterspritzt zu werden. Das Dokument beschreibt die Zusammensetzung des Haftvermittlers, der aus drei Komponenten besteht.

Aus JP 2002 210877 ist ebenfalls ein Spritzguss-Verbundteil bekannt, es werden konkrete Haftvermittler angegeben. Gleiches gilt für das Dokument JP 2000 280283. Aus DE 103 43 259 A1 ist es bekannt, dass die Folie vor dem Hinterspritzen in einem Spritzgusswerkzeug mit einem Plasmastrahl zu behandeln. Aus DE 103 43 259 C1 ist es bekannt, eine zu hinterspritzende Metallfolie mit einem Haftvermittler zu versehen und anschließend mit einem Plasma zu behandeln.

Spritzguss-Verbundteile dieser Art bzw. das Verfahren zu ihrer Herstellung sind mit Problemen verbunden. Die Verbindung des flachen Körpers und des aufgespritzten Körpers ist trotz spezieller Haftvermittler und vielerlei Versuchen mit Haftvermittlern nicht befriedigend. Dies gilt insbesondere für aufgespritzte Körper aus Materialien mit Polyolefinen bzw. damit verwandten Kunststoffen, insbesondere Polyethylen (PE).

Die Spritzguss-Verbundteile der eingangs genannten Art haben sich ausgesprochen bewährt und aufgrund der oberflächenbildenden ersten Oberfläche des flachen Körpers wird ein sehr guter Eindruck und eine hohe Oberflächenqualität erreicht, wie sie beispielsweise bei reinen Spritzgussteilen praktisch nicht realisierbar ist. Das Spritzguss-Verbundteil kann normale Spritzgussteile weitgehend ersetzen. Es eignet sich für unterschiedlichste Anwendungen wie beispielsweise Gehäuse mobiler Telefone, Gehäuse von elektronischen Geräten, wie beispielsweise MP3-Spieler, Computermaus, Innenraumteile von Kraftfahrzeugen, beispielsweise Teile von Armaturenbrettern usw. Der aufgespritzte Körper gibt dem Formteil die Stabilität, ist aber außen nicht sichtbar, für ihn kann daher ein relativ einfacher Kunststoff eingesetzt werden. Gerade für PE als Masse für den aufgespritzten Körper tritt jedoch ein Problem auf, die Oberfläche ist in molekularer Sicht ausgesprochen glatt, daher ist die Verbindung mit dem flachen Körper nicht zufriedenstellend.

Hier setzt die Erfindung ein. Sie hat es sich zur Aufgabe gemacht, das Spritzguss-Verbundteil und insbesondere den Haftvermittler sowie das Herstellungsverfahren dahingehend weiterzubilden und zu verbessern, dass eine stärke Bindung zum aufgespritzten Körper, der aus PE oder einem verwandten Kunststoff besteht, erreicht wird, so dass der aufgespritzte Körper fester als bislang mit dem flachen Körper verbunden ist.

Für das Spritzguss-Verbundteil der eingangs genannten Art wird diese Aufgabe dadurch gelöst, dass Körner aus Polyethylen oder einem anderen Polyolefin vorgesehen sind, die einerseits mit der Lage des Haftvermittlers verbunden sind und andererseits mit den Kunststoffkörper verbunden sind, mit dem sie beim Aufbringen der heißen Schmelze des Kunststoffkörpers in der Spritzgussform eine Verbindung mit dem Kunststoffkörper eingehen .

Für das Verfahren zur Herstellung des Spritzguss-Verbundteils wird diese Aufgabe dadurch gelöst, dass Körner, die aus Polyethylen oder einem anderen Polyolefin bestehen, aufgebracht werden, wobei a) diese Körner entweder dem Haftvermittler zugemischt und gemeinsam mit diesem aufgetragen werden oder b) diese Körner nachträglich auf die bereits aufgebrachte, noch aufnahmefähige Lage an Haftvermittler aufgetragen zumindest teilweise in diese eingebracht werden, dabei werden die Körner in den Fällen a) und b) jeweils so aufgebracht, dass sie einerseits mit der Lage verbunden sind und andererseits zumindest einige Körner aus der freien Oberfläche der Lage vorstehen, und Erstellen des aufgespritzten Kunststoffkörpers durch Aufspritzen einer heißen Schmelze aus Polyethylen oder einem anderen Polyolefin auf die mit den Körnern versehene Lage, wobei die Körner eine Verbindung mit dem aufgespritzten Kunststoffkörper eingehen.

Dieses Spritzguss-Verbundteil, der Haftvermittler bzw. Primer und das Verfahren haben den Vorteil, dass eine deutlich verbesserte Haftung des aufgespritzten PE-Körpers an den anderen Teilen des Spritzguss-Verbundteils erreicht wird. Beim Aufspritzen hat die verwendete Schmelze eine Temperatur, die so ausreichend ist, dass sie aus dem Haftvermittler vorstehende Körner und oberflächlich zugängige zumindest teilweise erweicht, so dass diese eine Verbindung mit der aufgespritzten Kunststoffmasse eingehen. Typischerweise hat im Spritzgussverfahren das heiß zugeführtes Polyolefin eine Temperatur von etwa 190° C, es schmilzt die im Primer gebundenen und mit der Kunststoffmasse in Kontakt tretenden Körner an und verbindet sich mit diesen mechanisch. Dafür müssen die Körner aus einem Kunststoff hergestellt sein, der eine Verbindung mit dem aufgespritzten Polyolefin eingeht. Die Körner sind daher aus Polyolefin, insbesondere demselben Polyolefin, das auch aufgespritzt wird. Sie können aber auch aus einem polyolefinähnlichen Material hergestellt sein. Es kann also ein verwandtes Material eingesetzt werden.

Weitere Vorteile und Merkmale der Erfindung ergeben sich aus den übrigen Ansprüchen sowie der nun folgenden Beschreibung von fünf nicht einschränkend zu verstehenden Ausführungsbeispielen der Erfindung, die unter Bezugnahme auf die Zeichnung näher erläutert werden. Dabei wird auch das Verfahren erläutert. In der Zeichnung zeigen:
- Fig. 1 :: ein Schnittbild durch ein Spritzguss-Verbundteil aus Kunststoff für ein erstes Ausführungsbeispiel mit einem transparenten Folienzuschnitt als flacher Körper,
- Fig. 2:: eine stark vergrößerte Darstellung des Ausschnitts II in Fig. 1 ,
- Fig. 3:: der Ausschnitt wie Fig. 2, jedoch für ein zweites Ausführungsbeispiel, nämlich nun mit Körnern, die dem Haftvermittler bereits vor dessen Auftragung zugemischt sind,
- Fig. 4:: ein Schnittbild durch ein Teilstück einer Spritzgussform und ein Spritzguss-Verbundteil für ein drittes Ausführungsbeispiel mit einem flachen Körper, der aus einem Stein geschnitten ist,
- Fig. 5:: ein Schnittbild durch ein Spritzguss-Verbundteil für ein viertes Ausführungsbeispiel mit einem Zuschnitt aus Leder als flacher Körper, und
- Fig. 6:: ein Schnittbild durch ein Spritzguss-Verbundteil für ein fünftes Ausführungsbeispiel mit einem flachen Körper, der aus einem Zuschnitt einer Metallfolie gebildet ist

Die in den Figuren schnittbildlich dargestellten Teilstücke eines Spritzguss-Verbundteils sind so dargestellt, dass eine Erläuterung des Aufbaus und des Verfahrens möglich ist. Die Schichtdicken sind nicht maßstabsgerecht dargestellt. Es gilt für die Schichtdicken die nun folgende Beschreibung.

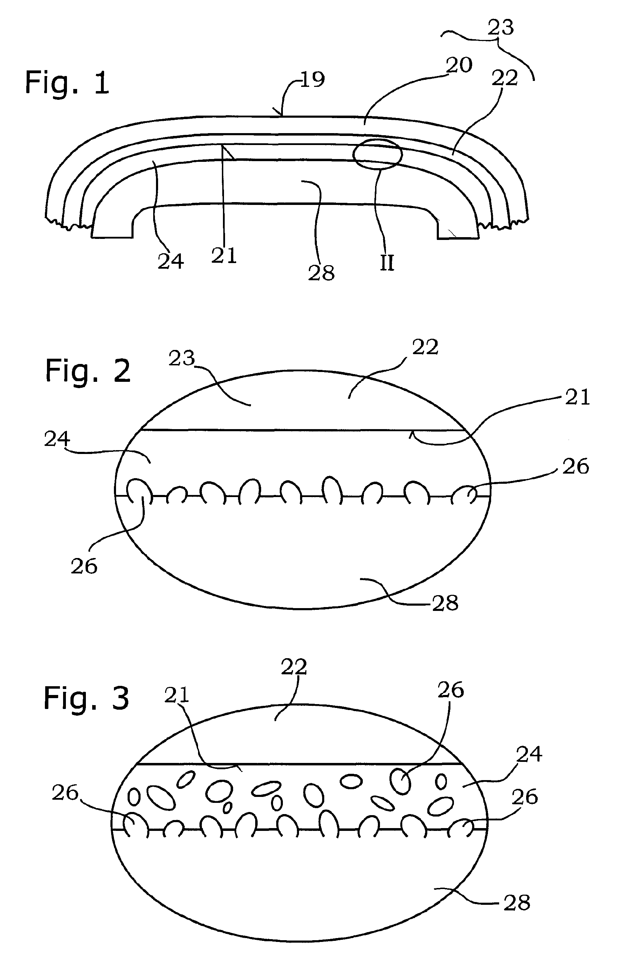

Bei den in den Figuren 1 und 4 bis 6 gezeigten Teilstücken eines Gehäuses ist oben die Außenseite und unten die Gehäuseinnenseite. Im ersten Ausführungsbeispiel nach den Figuren 1 und 2 wird die Außenseite begrenzt von einer Außenfolie 20. Sie hat eine erste Oberfläche 19 und eine Innenfläche. Für sie wird eine qualitativ hochwertige und eine glatte erste Oberfläche 19 aufweisende Folie eingesetzt, die großtechnisch hergestellt ist und es wird ein entsprechender Zuschnitt hergestellt. Verwendet wird beispielsweise eine Folie aus einem Polyamid/Polypropylen-Copolymeren, z.B. PA/PP3/110 der Firma Südpack Ochsenhausen, mit einer Stärke von 0,11 mm, die Folie ist vollständig transparent, ihre Außenoberfläche ist so glatt wie möglich. Die Polypropylenseite bildet die Innenfläche, sie ist koronabehandelt oder ähnlich, beispielsweise plasmabehandelt.

Anstelle der konkret genannten Folie können andere Folienmaterialien aus Kunststoff zum Einsatz kommen. Die Folie kann gefärbt sein, sie kann mehr oder weniger transparent sein, so dass die darunter liegende Struktur mehr oder weniger erkannt werden kann.

Auf die die Innenfläche dieser Außenfolie 20 ist eine Informationsschicht 22 bzw. Dekorschicht aufgebracht, sie besteht im Allgemeinen aus mehreren, nebeneinander und/oder übereinander liegenden Schichten aus unterschiedlichen Farben. Verwendet werden können Farben der Firma Marabu Tamm, beispielsweise PP-Maraprop. Die Farbschicht hat beispielsweise eine Dicke von 5 bis 8 Mikrometern und wird im Siebdruck aufgebracht.

Anstelle der Farbschicht oder zusätzlich zu dieser können auch andere Schichten vorgesehen sein, beispielsweise eine Elektrolumineszenzschicht, eine mit Leuchtdioden belegte Schicht usw.. Anstelle der Informationsschicht 22 kann auch mindestens eine andere Schicht oder keine Schicht vorgesehen sein.

Die Außenfolie 20 und die Informationsschicht 22 bilden zusammen einen flachen Körper 23, dieser hat eine zweite Oberfläche 21. Auf diese zweite Oberfläche 21, die von der Informationsschicht 22 gebildet wird, ist eine Lage 24 eines Haftvermittlers 24 aufgebracht. Verwendet wird ein Primer vom Typ T8380 der Firma Tramaco Pinneberg. Er weist ein Lösemittel auf, beispielsweise Toluol. Dieses sorgt für eine Verbindung durch Anlösen mit der Informationsschicht 22. Der Haftvermittler wird auf die getrocknete Informationsschicht 22 aufgebracht. Das Aufbringen erfolgt im Siebdruck. Andere Auftragsverfahren sind möglich, beispielsweise Aufsprühen, Aufrollen, Aufstreichen. Auf die aufgebrachte, noch klebfähige Lage 24 werden nun Körner aus Polyethylen oder einem PE-ähnlichen Material aufgestreut und so bearbeitet, dass sie in die oberflächliche Lage des Haftvermittlers 24 eindringen können. Vorzugsweise sollen sie zur Hälfte in diese Lage 24 eingebettet sein, zur Hälfte aus dieser hervorragen. Sie sollen jedenfalls von außen zugänglich sein.

Die Lage 24 des Haftvermittlers hat typischerweise eine Dicke von etwa 0,18 bis 0,2 mm. Als Material für die Körner wird ein PE-Pulver Microscub 110 PC mit einer Korngröße von etwa 0,15 mm des Herstellers Tramaco Pinneberg verwendet. Diese Körner werden beispielsweise in die Lage 24 eingewalzt, eingerüttelt oder auf anderem Wege eingedrückt. Es können auch andere Haftvermittler eingesetzt werden, beispielsweise diejenigen nach den eingangs genannten Dokumenten. Die Körner 26 können farbig oder farblos sein.

Die bislang beschriebene Anordnung bildet ein Zwischenprodukt 23 aus, es hat eine Schichtstruktur. Seine Dicke liegt im beschriebenen Beispiel unter 1 mm. Es kann, wie beschrieben, hergestellt werden, indem für die Außenfolie 20 zunächst ein entsprechender Zuschnitt erstellt wird und auf diesen Zuschnitt die weiteren Schichten 20 bis 26 aufgebracht werden. Insbesondere kann aber auch eine Rollenware der Außenfolie 20 zunächst entsprechend mit den Schichten 22 bis 26 versehen werden und erst anschließend das Zuschneiden in die gewünschte Form erfolgen.

Das beschriebene Zwischenprodukt 23, das zugeschnitten ist, ist in einem Hochdruckverfahren oder einem anderen geeigneten Verformungsverfahren auf die gewünschte Geometrie verformt, im Allgemeinen in eine dreidimensionale Geometrie. Zu den Verformungsverfahren wird auf die VDI Richtlinie 2008 verwiesen.

Das Aufbringen der Lage aus Haftvermittler 24 kann vor oder nach dem Verformen durchgeführt werden. Insgesamt ist das erhaltene verformte Zwischenprodukt in gewissem Maße formbeständig. Aufgrund seiner dünnen Materialstärke ist es aber für einen praktischen Einsatz im Allgemeinen nicht geeignet.

Unterhalb der mit den Körnern 26 versehenen Lage 24 des Haftvermittlers befindet sich ein aufgespritzter Körper 28 aus Polyethylen, er ist im Spritzgussverfahren hergestellt. Hierfür wird das verformte Zwischenprodukt in ein Spritzgusswerkzeug eingelegt, auf die Lage 24 mit dem Haftvermittler und die Körner 26 wird im Spritzgrußverfahren eine Schmelze aus Polyethylen aufgespritzt. Dabei liegt die Spritztemperatur etwa im Bereich von 190° C. Die aufgespritzte Materialstärke ist grundsätzlich beliebig und wird durch das Spritzgusswerkzeug vorgegeben. Durch den Spritzvorgang wird die Dicke des späteren Spritzguss-Verbundteils im Allgemeinen unregelmäßig und nicht mehr, wie dies bei dem Zwischenprodukt gegeben ist, im Wesentlichen gleichmäßig. Es wird dort Kunststoff aufgebracht, wo man eine mechanische Verstärkung wünscht und es wird in dem Maße Kunststoff zugeführt, in dem diese mechanische Verstärkung benötigt wird. Die Dicke des aufgespritzten PE-Körpers 28 ist darüber hinaus noch durch andere Überlegungen, beispielsweise hinsichtlich etwaiger Befestigungsteile für das fertige Spritzguss-Verbundteil, Montagemittel usw. bestimmt.

Verwendet wird ein Granulat PE-HD Hostalen (eingetragene Marke) GC7260 der Firma Basell Polyolefins GmbH, die Materialstärke beträgt z.B. 3 mm. Anstelle des beschriebenen Granulats aus PE-HD können auch andere Polyolefine und verwandte Materialien verwendet werden. Das im Spritzgussverfahren heiß zugeführte PE schmilzt die Körper 28, die in der Lage 24 Haftvermittler eingebunden sind, partiell an und verbindet sich mit diesen. Dadurch wird eine mechanische Haftung und Verkrallung des aufgespritzten PE-Körpers 28 mit dem Zwischenprodukt 23 erreicht. Die konkrete Verbindung des Körpers 28 mit den Körnern 26 soll so sein, dass der Körper 28 mit den Körnern 26 ausreichend fest verbunden ist, dies kann durch Anschmelzen, Verschmelzen oder dergleichen erfolgen. Es kann auch ausreichen, dass ein Formschluss mit den Körpern 28 oberflächlich eintritt. Die Haftung zwischen den Körnern 26 und dem Körper 28 kann also rein auf Formschluss beruhen, sie kann sich erstrecken bis hin zu einem weitgehenden Auflösen der Körper 28, zumindest soweit sie über die Oberfläche der Lage 24 vorstehen, sofern noch genügend Anteil dieser Körner in der Lage des Haftvermittlers verhaftet und gehalten ist oder die Schmelze in den Raum der Körner eindringen kann.

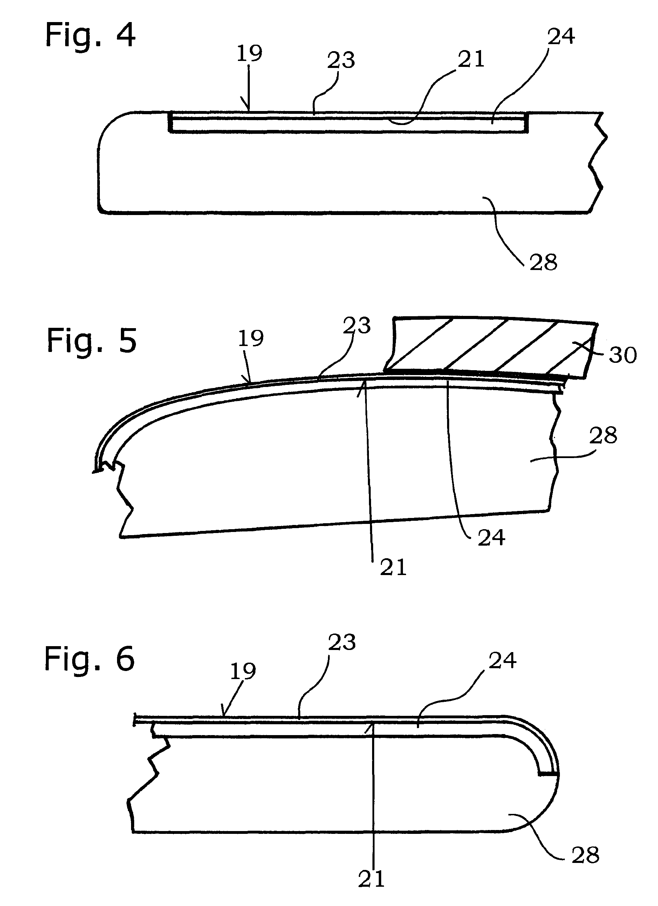

In dem dritten Ausführungsbeispiel nach Fig. 4 besteht der flache Körper 23 nicht aus einer Schichtstruktur, sondern nur aus einem einzigen flachen Teil. Er wird gebildet von einer dünnen Platte konstanter Dicke, die aus einem Stein, beispielsweise Basalt oder Marmor, geschnitten ist. Seine erste Oberfläche ist so behandelt, dass die Eigenschaften des Steins gut zur Wirkung kommen. Auf der Innenfläche ist ein geeigneter Haftvermittler in Form der Lage 24 aufgetragen. Es versteht sich, dass hier ein anderer Haftvermittler als im ersten und im zweiten Ausführungsbeispiel gewählt ist, der Haftvermittler ist jeweils insbesondere dem Material angepasst aus dem der flache Körper 23 hergestellt ist. Ist der flache Körper eine Schichtstruktur, so ist Haftvermittler im Material derjenigen Schicht angepasst, auf die er unmittelbar aufgetragen ist. Der Haftvermittler ist darüber hinaus auch so ausgebildet, dass eine Verbindung mit den Körnern 26 erreicht wird.

Wiederum ist auf die Lage 24 und die dortigen, oberflächigen Körner 26 ein aufgespritzter Körper 28 aus einem Polyolefin aufgebracht. Dieser schließt auch seitlich an den flachen Körper 23, sodass die erste Oberfläche des flachen Körpers 23 nahtlos und ohne Versatz in die Oberfläche des aufgespritzten Körpers 28 übergeht.

Die Dicke der Steinschicht, die den flachen Körper 23 bildet, liegt beispielsweise bei wenigen 10tel mm oder wenigen 100tel mm, z.B. 0,1 mm. Die Lage 24 hat eine Schichtdicke von etwa 0,2 mm. Der aufgespritzte Körper 28 hat eine Dicke von etwa 2 mm.

In Fig. 5 ist ein viertes Ausführungsbeispiel gezeigt, hier wird der flache Körper 23 gebildet durch eine dünne Schicht aus einem Leder. Es ist auf seiner zweiten Oberfläche 21 mit einer Lage 24 eines geeigneten Haftvermittlers beschichtet. Wiederum ist auf diese Schicht ein Körper 28 aufgespritzt. Die Formgebung des Zwischenproduktes aus flachem Körper 23 und der Lage 24 erfolgt dabei während des Spritzvorgangs. Im Gegensatz zum ersten Ausführungsbeispiel ist also ein separater Verformungsschritt nicht notwendig. Ein solcher kann aber vorgesehen sein, insbesondere dann, wenn die dünne Lederschicht noch durch eine zusätzliche Schicht verstärkt wird, beispielsweise eine Schicht aus einem Polyamin oder dergleichen. Die Dicke der Lederschicht liegt bei etwa 0,3 mm, die Lage 24 des Haftvermittlers hat eine Dicke von etwa 0,5 bis 1 mm. Der aufgespritzte Körper 28 ist mehrere Millimeter dick.

Fig. 5 zeigt auch ein Teilstück einer Spritzgussform 30 nach dem Stand der Technik. Der flache Körper 23 ist mit seiner ersten Oberfläche 19 in Anlage an der Innenwand der Spritzgussform 30, dieser Zustand liegt beim Spritzgussvorgang vor.

Im fünften Ausführungsbeispiel nach Figur 6 wird der flache Körper 23 durch eine Metallfolie, hier eine Edelstahlfolie gebildet. Die zweite Oberfläche 21 ist mit einer Lage 24 eines geeigneten Haftvermittlers belegt. Auf diese ist wiederum der aufgespritzte Körper 28 aufgebracht, auch hier ist bündig gearbeitet worden.

Die Edelstahlfolie hat eine Dicke von 50 Mikrometern, die Lage 24 ist 150 Mikrometer dick. Der aufgespritzte Körper 28 hat eine Dicke von etwa 1,5 mm.

Insgesamt kann man als flachen Körper 23 somit ein Material mit hochwertiger Oberfläche verwenden. Dieses Material bestimmt den Eindruck, den das Spritzguss-Verbundteil macht. Unterhalb des oberflächenbildenden flachen Körpers 23 befinden sich mechanisch stützende Strukturen, die beim praktischen Gebrauch des Spritzguss-Verbundteils nicht erkennbar sein müssen, allerdings durchaus erkennbar sein können, wie das erste Ausführungsbeispiel zeigt.

## Patentansprüche

1. Spritzguss-Verbundteil mit einem flachen Körper (23), der eine erste Oberfläche (19) und eine zweite Oberfläche (21) hat, mit einer Lage (24) eines Haftvermittlers, die auf die zweite Oberfläche (21) aufgebracht ist und mit einem auf diese Lage (24) aufgespritzten Körper (28) aus Polyethylen oder einem anderen Polyolefin, **gekennzeichnet durch** Körner (26) aus Polyethylen oder einem anderen Polyolefin, die einerseits mit der Lage (24) des Haftvermittlers verbunden sind und andererseits mit den Kunststoffkörper verbunden sind, indem sie beim Aufbringen der heißen Schmelze des aufgespritzten Körpers (28) in einer Spritzgussform (30) eine Verbindung mit dem Kunststoffkörper eingehen.

2. Spritzguss-Verbundteil nach Anspruch 1 , **dadurch gekennzeichnet, dass** der flache Körper (23) ausgewählt ist, aus der folgenden Liste: Ein Zuschnitt aus einem flachen Bahnmaterial, ein Zuschnitt aus einem Naturmaterial wie Leder, Holz, Stein, aus einem Stoff, aus einem Metall.

3. Spritzguss-Verbundteil nach Anspruch 1 , **dadurch gekennzeichnet, dass** der flache Körper (23) vor oder nach dem Auftragen der Lage (24) des Haftvermittlers zugeschnitten ist.

4. Spritzguss-Verbundteil nach Anspruch 1 , **dadurch gekennzeichnet, dass** die Körner (26) eine Korngröße im Bereich 2 bis 1000 Mikrometer, insbesondere 10 bis 500 und vorzugsweise 50 bis 250 Mikrometer haben.

5. Spritzguss-Verbundteil nach Anspruch 1 , **dadurch gekennzeichnet, dass** der Haftvermittler mit den Körnern (26) vermischt ist oder die Körner (26) auf die freie Oberfläche der Lage (24) an Haftvermittler aufgebracht und in diese teilweise eingearbeitet sind.

6. Spritzguss-Verbundteil nach Anspruch 1 , **dadurch gekennzeichnet, dass** zumindest einige der Körner (26) teilweise in die Lage (24) aus Haftvermittler eingebettet sind und teilweise in den aufgespritzten Körper (28) hineinragen, vorzugsweise mit diesem durch Anschmelzen verbunden sind.

7. Spritzguss-Verbundteil nach Anspruch 1 , **dadurch gekennzeichnet, dass** der flache Körper (23) eine Schichtstruktur aufweist, die sich zusammensetzt aus a) mindestens einer Außenfolie (20), welche transparent ist und die äußere Oberfläche ausbildet und b) mindestens einer weiteren Schicht (22), die mit dieser Außenfolie (20) verbunden ist.

8. Spritzguss-Verbundteil nach Anspruch 1 , **dadurch gekennzeichnet, dass** die Körner (26) eine Färbung aufweisen oder aus einem transparenten Material gefertigt sind.

9. Spritzguss-Verbundteil nach Anspruch 1 , **dadurch gekennzeichnet, dass** der flache Körper (23) eine konstante Dicke hat, und dass insbesondere die Dicke kleiner als 1 mm ist und vorzugsweise deutlich dünner als 1 mm ist.

10. Spritzguss-Verbundteil nach Anspruch 1 , **dadurch gekennzeichnet, dass** die erste Oberfläche (19) eine Außenfläche des Spritzguss-Verbundteils ist.

11. Spritzguss-Verbundteil nach Anspruch 1 , **dadurch gekennzeichnet, dass** der flache Körper (23) dreidimensional verformt wird, vor oder nachdem die Lage (24) an Haftvermittler und die Körner (26) auf den flachen Körper (23) aufgebracht sind.

12. Spritzguss-Verbundteil nach Anspruch 1 , **dadurch gekennzeichnet, dass** der Haftvermittler ein Lösungsmittel aufweist, das dem Material des flachen Körpers (23) angepasst ist und dieses Material anlöst.

13. Spritzguss-Verbundteil nach Anspruch 1, **dadurch gekennzeichnet, dass** der Haftvermittler dem Material der Körner (26) angepasst ist

14. Haftvermittler für ein Spritzguss-Verbundteil, das einen flachen Körper (23) aufweist, der eine erste Oberfläche (19) und eine zweite Oberfläche (21) hat, wobei auf die zweite Oberfläche (21) eine Lage (24) des Haftvermittlers aufgebracht ist, **gekennzeichnet durch** Körner (26) aus Polyethylen oder einem anderen Polyolefin, die mit der Lage (24) des Haftvermittlers verbunden sind und aus der Lage (24) vorstehen, so dass sie zugänglich sind.

15. Verfahren zur Herstellung eines Spritzguss-Verbundteils mit folgenden Verfahrensschritten:
- Bereitstellen eines flachen Körpers (23), der eine erste Oberfläche (19) und eine zweite Oberfläche (21) hat,
- Aufbringen einer Lage (24) eines Haftvermittlers auf die zweite Oberfläche (21) des flachen Körpers (23),
- Aufbringen von Körnern (26), die aus Polyethylen oder einem anderen Polyolefin bestehen, wobei a) diese Körner (26) entweder dem Haftvermittler zugemischt und gemeinsam mit diesem aufgetragen werden oder b) diese Körner (26) nachträglich auf die bereits aufgebrachte, noch aufnahmefähige Lage (24) an Haftvermittler aufgetragen zumindest teilweise in diese eingebracht werden, dabei werden die Körner (26) in den Fällen a) und b) jeweils so aufgebracht, dass sie einerseits mit der Lage (24) verbunden sind und andererseits zumindest einige Körner (26) aus der freien Oberfläche der Lage (24) vorstehen,
- Einbringen des so erhaltenen Zwischenprodukts in eine Spritzgussform (30), und
- Erstellen eines aufgespritzten Kunststoffkörpers durch Aufspritzen einer heißen Schmelze aus Polyethylen oder einem anderen Polyolefin auf die mit den Körnern (26) versehene Lage (24), wobei zumindest einige Körner (26) eine Verbindung mit dem aufgespritzten Körper (28) eingehen.

16. Verfahren nach Anspruch 15, **dadurch gekennzeichnet, dass** der flache Körper (23) ausgewählt ist aus folgender Liste: ein Zuschnitt aus einem Naturmaterial wie Leder, Holz, Stein, aus einem Stoff, aus einem Metall

17. Verfahren nach Anspruch 15, **dadurch gekennzeichnet, dass** die Erweichungstemperatur der Körner (26) nicht größer ist als diejenige des Kunststoffs des aufgespritzten Körpers (28).
